(19) Europäisches Patentamt
European Patent Office
Office européen des brevets

(11) **EP 3 939 758 B1**

(12) **EUROPEAN PATENT SPECIFICATION**

(45) Date of publication and mention
of the grant of the patent:
**08.01.2025 Bulletin 2025/02**

(21) Application number: **20186300.8**

(22) Date of filing: **16.07.2020**

(51) International Patent Classification (IPC):
*B27N 3/28* (2006.01)    *B27N 3/00* (2006.01)
*B27N 3/18* (2006.01)    *B29C 70/08* (2006.01)
*B29C 48/06* (2019.01)    *B29C 48/285* (2019.01)
*B29C 48/76* (2019.01)    *B29C 48/90* (2019.01)
*B29C 48/92* (2019.01)

(52) Cooperative Patent Classification (CPC):
**B29C 48/16; B27N 1/006; B27N 3/04; B27N 3/143;
B27N 3/18; B27N 3/28; B29C 48/06;
B29C 48/2886; B29C 48/767; B29C 48/90;
B29C 48/92; B29C 70/081;** B29C 2948/92019;
B29C 2948/9238; B29C 2948/9258;    (Cont.)

(54) **PLASTIC AND WOOD FIBER BASED COMPOSITE PRODUCT AND METHOD AND APPARATUS FOR MANUFACTURING SAID PLASTIC AND WOOD FIBER BASED COMPOSITE PRODUCT**

VERBUNDPRODUKT AUF DER BASIS VON KUNSTSTOFF UND HOLZFASERN SOWIE VERFAHREN UND VORRICHTUNG ZUR HERSTELLUNG DIESES VERBUNDPRODUKTES AUF DER BASIS VON KUNSTSTOFF UND HOLZFASERN

PRODUIT COMPOSITE À BASE DE PLASTIQUE ET DE FIBRES DE BOIS ET PROCÉDÉ ET APPAREIL DE FABRICATION DUDIT PRODUIT COMPOSITE À BASE DE PLASTIQUE ET DE FIBRES DE BOIS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**19.01.2022 Bulletin 2022/03**

(73) Proprietor: **Aviplast WFC B.V.**
**7241 CR Lochem (NL)**

(72) Inventors:
• **VAN DIJK, Dirk**
**7241CR Lochem (NL)**

• **DERKSEN, Wilhelmus Johannes Maria**
**7241 CR Lochem (NL)**
• **TEN BUSSCHEN, Albert**
**7241 CR Lochem (NL)**

(74) Representative: **van Dam, Vincent**
**Octrooibureau Vriesendorp & Gaade B.V.**
**Koninginnegracht 19**
**2514 AB Den Haag (NL)**

(56) References cited:
**WO-A1-94/11176        JP-A- H1 071 636**
**US-A1- 2004 219 357    US-A1- 2005 013 984**
**US-A1- 2007 063 373**

(52) Cooperative Patent Classification (CPC): (Cont.)
B29C 2948/926; B29C 2948/92685

## Description

The present invention relates to a plastic based composite product and a method for manufacturing said composite product. The invention also relates to an apparatus for manufacturing said composite product.

Plastic and wood fiber based composite products are often used as alternative for wooden construction parts, in particular in buildings. For instance, such composite products can be used in wall structures, wall covering panels, and boards and railing systems. Such construction parts must have high strength, combined with low maintenance and have an appealing natural look. It is desirable that such composite products can be manufactured at low cost but which nevertheless meets high standards which may be required in respect of diverse properties. Such properties can relate for instance to mechanical properties, fire resistance, weather resistance, non-ageing properties and the like. An example of such a composite product is disclosed in EP 1 172 404 A1. US 2007/063373 A1 discloses a method and apparatus for manufacturing of plastic-based composite product.

The inventors however concluded that there is room for improvement, in particular in view of condensing the product to a higher maximum density. Higher density on its turn is beneficial for durability, strength, stiffness and product stability, UV resistance, fire resistance and resistance to creep deformation.

## Summary of the invention

In a first aspect the invention relates to a plastic and wood fiber based composite according to claim 1.

The invention relates in a second aspect to a method for manufacturing a plastic and wood fiber based composite product according to claim 10.

The invention relates in a third aspect to an apparatus for manufacturing a plastic and wood fiber based composite product according to claim 13.

The inventors have found that the use of a relatively high percentage of wood fibers of 70 to 80 % based on the total weight of plastic and wood fibers in combination with filling of the capillaries of said wood fibers with said plastic while the wood fibers remain intact with respect to their pre-filling state, provides a composite product with a moisture uptake after a 5 hours boiling test according to EN 1087-1 of 5 % or less and a density in kg/m$^3$ of 95 % or more of its maximal theoretical density. This product has a high density and is improved with regard to prior art wood fiber plastic based composite products with respect to outside durability and natural UV resistance, strength, stiffness, product stability, fire resistance and creep deformation.

The inventors have found that such a product is obtainable with the method of the invention. The method of the invention allows to fill the capillaries of said wood fibers with plastic while the wood fibers remain intact with respect to their pre-filling state such that an essentially void free product is obtained. This is associated by the provision of a step of exercising a compressive backward force to the product as it exits the cooling die. This additional back pushing force allows to achieve a higher pressure in step IV) of mixing and dispersing the molten plastic around and into the wood fibers. As a result, any void left after the degassing step III) is pushed out of the wood fibers while the wood fibers retain their shape and an essentially void free product is obtained with high density and the abovementioned further advantageous characteristics. The absence or near absence of any voids is reflected by the products low moisture uptake after a 5 hours boiling test according to EN 1087-1 of less than 5%. Exercising a compressive backward force to the product, as it exits the cooling die, would lead to buckling or deformation of the product as it exits the cooling die if no measures were taken, in particular because the inside of the product is in general not yet solidified as it exits the cooling die. The provision of the condensing die downstream of the cooling die, which by means of design also supports the product in process, avoids this and allows to exercise the back pushing compressive backward force without the risk of buckling or collapse of the product.

## Short description of the drawings

Fig.1 shows a schematic representation of an embodiment of the apparatus according to the invention with a diagram which represents the pressures in the various sections of the apparatus.

Fig.2 shows a diagram of composite density in dependency of various pressures applied by compression moulding.

Fig.3 shows wood product composite voids in a conventional wood fiber composite (WFC) (Fig. 3A) and filled voids in a wood fiber composite according to the invention (HDWFC) (Fig. 3B).

## Detailed description of the invention

The plastic and wood fiber based composite product according to the invention comprises a plastic in which wood fibers are homogeneously embedded in a mass percentage of 70 - 80 % based on the total weight of the wood fibers and the plastic in which the wood fibers are embedded contained in the product. This total weight excludes other additives such as reinforcements, fillers or the like.

The plastic is a thermoplastic polymer, such as a bio based thermoplastic polymer. Preferred thermoplastic polymers may be homo or co-polymers of polypropylene (PP), polyethylene (PE), polyvinylchloride (PVC), polystyrene (PS), or a combination thereof. Such plastics have been proven successful fiber binders in the art of plastic and wood fiber based composite product(s). Recycled plastics can also be used as fiber binder.

The wood fibers may be derived from any source of wood, including recycled wood. Particular suitable wood sources include without limitation coniferous wood, such as pine or spruce, or firs, or broad leaved (deciduous) wood species such as birch and poplar. The fibers can be from a single source or a mixture of fibers of different origin.

The fibers in the composite product of the invention comprise large fibers with a dominant orientation in a chosen product principal direction and a length in the particle principle direction of 2 - 6 mm and small fibers with a random orientation and a length smaller than the length of said large particles. The length of the large fibers, in the range of 2 - 6 mm, is important in order to reach the desired characteristic with regard to strength, stiffness and to obtain a natural look. Moreover it is important that these fibers have a large length as compared to the diameter to ensure a sufficient length/ diameter (L/D) ratio for mechanical strength in relation to the volume of fibers by weight of product. Suitable L/D ratios in this respect may range from 4-20. The small fibers have a length in the particle principle direction of at least 0,5 mm, such as between 0,5 mm and less than 2 mm.

In order to provide sufficient strength it is preferred that the oriented fibers, i.e. the large fibers are present in a percentage of at least 25 % by weight in relation to the total weight of the fibers, preferably more than 50 % preferably more than 60%. Optimal results are obtained when the long fibers contain more than 60 % by weight in relation to the total weight of the fibers.

In the composite product of the invention, the capillaries of said wood fibers are filled with said plastic. That means that voids between the fibers, but also crevices and intercellular voids or spaces in the fibers and even intracellular voids are filled with plastic. Due to the measures taken in the method of the invention the wood fibers retain their shape with respect to their pre-filling state even though they are exposed to high pressure differences. The result is that the composite product is essentially or even completely void free, which is reflected in the fact that it has a moisture uptake after a 5 hours boiling test according to EN 1087-1 of 5% or less, such as 4% or less and in that it has a density in kg/m$^3$ of 95% or more of its maximal theoretical density. It is preferred in this respect that, in the composite product according to the invention, the wood fibers embedded in the plastic are void free as determined by Scanning Electron Microscopy and/or Energy Dispersive X-Ray (SEM/EDX) analysis.

The plastic binds the fibers. It is preferred that the amount of plastic is as low as possible without detrimental effects on the strength, stability and stiffness of the product. This is advantageous for reasons of the environment, cost price and it also contributes to the natural look of the product as the composite product will have close similarity to natural wood products and good adhesion for paints and glues . It is therefore preferred that wood fibers are embedded in said plastic in an abutted fashion at least along the dominant orientation. This is made possible by the present invention due to the increased, high pressure in step IV) when mixing and dispersing the molten plastic around and into the wood fibers takes place, in combination with the high amount of wood fibers with respect to the amount of plastic. In this way it becomes possible that the plastic penetrates in the voids, thus providing strength, stability and rigidity to the product. This allows that only the plastic necessary to bind the fibers with each other needs to be present between fibers.

The composite product of the invention has a density in kg/m$^3$ of 95 % or more of its maximum theoretical density, preferably a density in kg/m$^3$ of 96 % or more of its maximal theoretical density, even more preferably 97 % or more, such as 98 % or more.

This theoretical density is calculated as follows:
The wood fibre plastic composite is considered as a composite product that contains wood fibres (f) that are embedded in a plastic matrix (m). It is assumed that there are no further components and no voids (porosities). In that case the fibre volume fraction ($v_f$) can be expressed in the component mass fractions ($m_f$ and $m_m$) and component densities ($\rho_f$ and $\rho_m$) in the following manner:

$$v_f = m_f\ \rho_m\ /\ (m_f\ \rho_m\ +\ m_m\ \rho_f) \qquad\qquad \text{(Formula 1)}$$

Because there are no other components (and thus no porosities) the following assumptions are made:

$$v_f\ +\ v_m = 1 \qquad \text{and} \quad m_f\ +\ m_m = 1 \qquad \text{(Formulas 2 and 3)}$$

From the component volume fractions and the component densities the composite density can be calculated:

$$\rho_c\ =\ v_f\ \rho_f\ +\ v_m\ \rho_m \qquad\qquad \text{(Formula 4)}$$

This formula gives the maximum theoretical density ($\rho_c$) of a composite product in which no voids (porosities) are present.

For example, for the combination of spruce as wood fibre and PP as a thermoplastic matrix the calculation of the maximum attainable density is calculated as follows: First the density of the wood fiber without voids is determined:

$$\rho_f = 1450 \ kg/m^3$$

This is the weighed density of the densities of 40% cellulose, 30% hemicellulose (both 1500 kg/m$^3$) and 25% lignin (1300 kg/m$^3$) of which the cell wall of coniferous wood (like pine or spruce) is composed. The other necessary parameters for the calculation are:

$$\rho_m = 900 \ kg/m^3$$

This is the density of PP.

$$m_f = 0,73 = 73\%$$

A percentage of 73% wood fibre by weight of the total composite product is used in this example

Then Formula 1 is used:

$$v_f = 0,626 = 62,6 \ \%$$

Then, using Formulas 2,3 and 4 the maximum theoretical density can be calculated as:

$$\rho_c = 1245 \ kg/m^3$$

In a very suitable composite product the plastic is polypropylene and the density of said composite product is between 1200 and 1220 kg/m$^3$. In the specific case where the density of 1220 kg/m$^3$ has been measured, this is 98% of the maximum theoretical density of 1245 kg/m$^3$. In another very suitable composite product the plastic is polyvinylchloride and the density of said composite product is between 1400 and 1420 kg/m$^3$. These composite products comply with all requirements for construction purposes.

In terms of appearance and weight of the product in accordance to the invention, the composite product can, if desired, display a striking similarity with natural wood or wood based products.

The product according to the invention can be machined with normal wood working tools and normal wood processing machines. In the usual manner of wood it can be nailed, sawn, screwed, glued, painted and lacquered.

In the composite product of the invention, further additives may be present that fulfil an additional function with respect to the main material of the profile.

In a preferred embodiment the product contains reinforcement elements, preferably reinforcement elements of metal, natural material or synthetic material in order to provide a reinforced profile. Such reinforcements elements can be included into the product by taking the measures disclosed EP 1 610 938 B1. Such reinforced profiles may for instance be used as supporting framework on which a floor or terrace is mounted by means of nails or screws or profiles for window or door frames.

The composite product according to the invention may suitably be a construction element selected from an I-profile, H-profile or another profile comprising a body and legs or arms that are protruding therefrom or a construction element having the shape of a hollow or tubular profile.

The composite product according to the invention is suitably obtainable by the method of the invention and by means of the apparatus of the invention. The features discussed in regard of the apparatus may also be applicable for the method and vice versa.

The method of the invention involves an extrusion process characterized by pushing the material to be extruded forward through an extruder and dies. The method according to the invention involves a shaping process under significant overpressure, wherein the material is pushed forward as a plug (plug flow) through dies for respectively orientation, shaping, cooling and condensing.

For this purpose the extruder is provided with a means to blend and push the fluid material forward through a pressure increasing extrusion zone, a heated shaping die, a cooling die, and a condensing die attached to the extruder. Such an extrusion process is also referred to as pushtrusion. The means to push the fluid material forward may suitably include a driving screw or screws that is /are driven by a motor. This may for instance be a co-rotating twin-screw configuration that is driven by an electromotor.

The extruder is fed with an agglomerate of said plastic and said wood fibers. The agglomerate can be made upstream of the extrusion part of the apparatus and in the same apparatus. Accordingly, the apparatus also may include a device for preparing agglomerates. Alternatively the agglomerate can be made in a separate set-up. In the latter case the apparatus does not include a device for preparing agglomerates. In this regard, if the compounding process and the extrusion process are coupled, the method may include the optional step of preparing an agglomerate of said plastic and said wood fibers prior to the above defined step I). If the compounding process and the extrusion process are not coupled, the step of preparing an agglomerate of said plastic and said wood fibers may be performed prior to the above defined step I) separate of the method of the invention.

Agglomerates can be made by compounding a suitable mixture of plastic and wood fibers. To ensure efficient compounding, the wood fibers are preferably dried to moisture content of below 0.3 % by mass and are then compounded into an agglomerate with the plastic. A suitable compounder, including a wood drying and compounding process may involve the use of a screw compounder, for instance as described in WO 2012/072275 A1.

The agglomerate of plastic and wood fibers is fed into the extruder for instance into a barrel via a feed inlet provided on a top portion of the extruder. From this position the agglomerate is pressed forward to a heating and plasticizing zone configured to heat an agglomerate of said plastic and said wood fibers to obtain a fluid material. Here the agglomerate is heated above the melting temperature of the plastic to plasticize the agglomerate to obtain a fluid material and the pressure is preferably increased to enhance plasticization, for instance up to 150 bar. The temperature used is preferably above 200°C.

After the material is uniformly heated and plasticized, the fluid material is degassed in a degassing zone downstream of said heating and plasticizing zone and configured to degas the fluid material. The high temperature of the molten material, preferably on or 10° to 30 °C above the melting point of the plastic used, enables to extract under a vacuum, free and entrapped expanded air and gas in pores and cavities, whereas the molten and highly fluidised plastic is sucked into the capillary of the wood fibers by capillary action of the resin. There should not be any pressure in the centre of this zone of the extruder as this step takes place under a vacuum.

Next the material is passed to a pressure increasing extrusion zone downstream of said degassing zone, where the pressure is rapidly increased to enhance the capillary filling of the wood fiber cavities and press out all remaining voids. This zone is further configured to mix and disperse the molten plastic into and around the wood fibers, and to push the material further into dies including a condenser die at increasing pressure of up to at least 200 bar. This increasing pressure also results in increased pressure at the end of the degassing zone which further optimizes elimination of any voids. As a result any void left after the degassing step is pushed out of the wood fibers while the wood fibers retain their shape and an essentially void free product is obtained with high density and the abovementioned further advantageous characteristics.

The pressure in the pressure increasing zone is also partially effected by the orientation zone downstream thereof. This orientation zone comprises an orientation die configured to orientate the large fibers under further increasing of pressure to obtain a fluid mixture having orientated fibers in a plug-flow manner, wherein said large fibers have a dominant orientation in a chosen product principal direction and said small fibers have a random orientation. The fibers are oriented by means of so-called spiders comprising several legs in the direction of extrusion. Such spiders are well known in the art of extrusion. A so-called spider die comprises a mandrel connected to the outer die wall by several legs in the direction of extrusion. This way the spider legs will maintain and enhance fiber orientation and contribute to the high pressure downstream of the degassing zone.

Optimal results are obtained in this respect when the pressure is increased to a pressure of 220 -230 bar. It is therefore preferred that the pressure is increased in step IV) to a pressure of 220 - 230 bar. The pressure increase downstream of the degassing zone is facilitated by the back pushing compressive force exercised on the product in the condenser die upon exiting the cooling die as will be further explained below. This pressure is preferably maintained up to step VI).

After passing the orientation die, the fluid mixture with orientated fibers is pushed into a heated shaping die to shape said fluid mixture. In this stage the fluid mixture with orientated fibers is shaped to a desired shape. Here the product profile shape is formed while maintaining a flow of the material. As the material is pushed forward as a plug of molten material this flow is also referred to as "plug flow".

After passing the heated shaping die the shaped liquid profile is passed to a cooling die downstream of said heated shaping die and configured to cool the outer skin of said fluid mixture having orientated fibers to obtain a semisolidified product with a solidified outer skin. Here the outer skin of the shaped fluid mixture is cooled to obtain a product with a solidified outer skin. It is important here that after shaping, the skin of the liquid mixture is cooled under pressure to below the Vicat softening temperature of the plastic binder. This consolidation process is necessary to prevent delamination and matrix failure. This way the product skin is formed. The product skin gives some rigidity to the profile when it exits the cooling die. This makes it possible to apply a compressive force on the profile as it exits the die.

Namely, after the product exits the cooling die it enters a product condensing die configured to condense and support the product and in which a compressive backward force is exercised on the product exiting the cooling die to obtain the pressure of at least 200 bar in step IV) of the method of the invention, i.e. downstream of the degassing zone. The increasing pressure in the pressure increasing zone is this way created by the condenser die in combination with the fiber orientation die. This condenser die, located downstream of the cooling die, is configured to condense and support the product to an increased product density, while a compressive backward force is exercised on the product exiting the cooling die to obtain the pressure of at least 200 bar. This way directly after the degassing zone a pressure in the extrusion zone of at least 180 to 200 bar is obtained and which rapidly increase above 200 bar in a downstream fashion. In order to achieve these high pressures a compressive force acts on the product that exits the cooling die. The product exiting the cooling die would be too weak to sustain this compressive force without buckling or deformation. This is prevented by the provision of the condensing die which is placed around the product once the extrusion process is running and supports the product to maintain its shape and to prevent buckling or deformation.

The high pressure of above 200 bar is essential for the realization of a practically void-free wood fiber composite material with a high density (HDWFC). However, to obtain this by a classical set-up of an extruder in combination with directly mounted dies would give the drawback of excessive fiber damage because the screws must completely generate the pressure build up, resulting in excessive fiber breakage. In such a classical set-up the high density would be attained but the material would not have good mechanical performance anymore. The invention described herein enables that the pressure build up is partly realized by a backward compressive force so that the pressure build up in the screws is on such a level that the fiber length of the reinforcing wood particles stays intact. In this manner both a high density and a material with good mechanical performance is achieved.

The backward pushing compressive force can suitably be realised by a combination of friction generated by the condenser die that is clamped around the exiting product and a controlled compressive force that is generated by a forcecontrolled guiding mechanism further downstream. This can be realized by means of a compression control unit which is configured to apply a back pushing force to the shaped and cooled product back in the direction of the extruder. On the other hand it may be configured to apply a pulling force in a start-up phase of the method. In an exemplary embodiment, the compression control unit is configured as a caterpillar unit, wherein caterpillars on opposite sides of the shaped and cooled product exert a counterforce in upstream direction to as to provide counter pressure.

The backward pushing compressive force can suitably be realized by applying a counter pressure of between 25 and 80 bar, such as 50 bar. The counter pressure may be increased or decreased throughout operation of the process depending on the desired settings. For this purpose a density control system may be used which is configured to control process parameters and/or settings of the various apparatus parts.

In a phase of starting up the method, the product condenser die is not placed around the product yet and the product can exit the cooling die without compressive force or applying friction. Once the process is running the condenser die is placed (fully closed, see closed line 18) around the product and the back pushing compressive force can be applied by the compression control unit. In order to allow quick and easy placement and removal, the product condensing die is preferably configured as a collapsible die.

It is preferred that the apparatus comprises a density control system connected with a pressure sensor inside the entry of the fibre orientation die and with a means for driving the extruder. This enables speed and pressure constancy in the extruder. For instance, if the pre-set compound pressure drops, the system will give command to the extruder to increase the output of product and during start-up of the process, the system may command the compression control unit, to increase pulling or haul of speed.

## Examples

The following examples and explanation are meant to illustrate the invention and not to limit the scope of the invention.

## Example 1 - exemplary apparatus

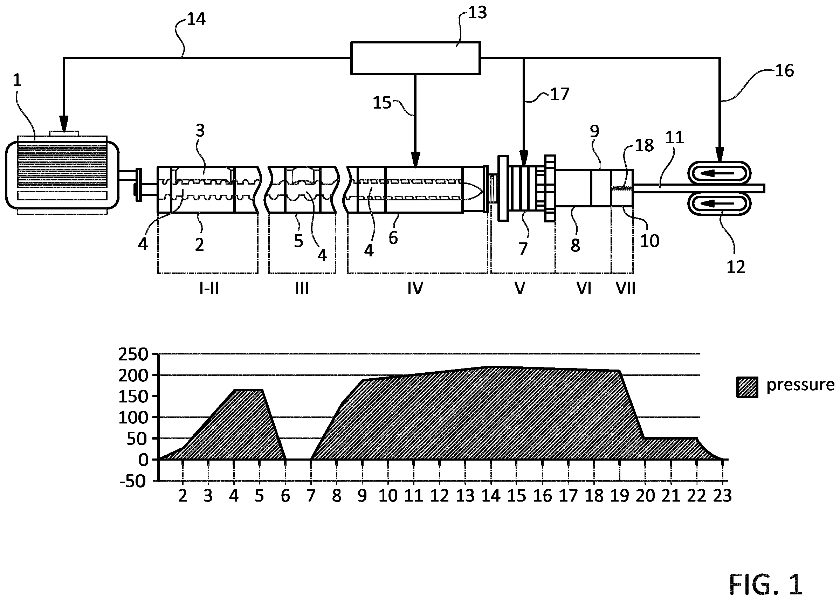

Fig 1 shows a schematic representation of an embodiment of the apparatus according to the invention with a diagram which represents the pressures in the various sections of the apparatus. In figure 1 an extruder is shown with a co-rotating twin-screw 4 that is driven by an electromotor 1. An agglomerate of plastic and wood fibers is fed into the extruder for instance into a barrel via a feed inlet 3 provided on a top portion of the extruder.

From this position the agglomerate is passed forward by means of twin-screw 4 to a heating and plasticizing zone 2 configured to heat an agglomerate of said plastic and said wood fibers to obtain a fluid material. Here the agglomerate is heated above the melting temperature of the plastic to plasticize the agglomerate to obtain a fluid material. This temperature is preferably above 200°C and the pressure is increased up to about 170 bar as shown between point 2 and 5 of the horizontal axis of the pressure diagram.

After the material is uniformly heated and plasticized, the fluid material is degassed in a degassing zone 5 downstream of said heating and plasticizing zone 2 and configured to degas and make possible to have the fluid material penetrate into the capillaries of the wood fibers by capillary action. As shown in the graph this is accompanied with a pressure drop starting at point 5 of the horizontal axis of the diagram. As can be seen between points 6 and 7 of the horizontal axis of the pressure diagram the pressure drops here to zero.

Next the material is passed to a rapid pressure increasing extrusion zone 6 downstream of said degassing zone 5, to fully fill the wood fiber capillaries with the resin under a combination of capillary action and squeezing of the fibers and further configured to mix and disperse the molten plastic around and into the wood fibers and to facilitate a downstream pressure increase up to 220 and 230 bar. Here the molten plastic is further mixed and dispersed around the wood fibers. As a result any void left after the degassing step is pushed out of the wood fibers while the wood fibers retain their shape and an essentially void free product is obtained with high density. See in this regard the pressure increase starting at point 7 to 9 of the horizontal axis of the pressure diagram. The pressure increases here gradually to 190 Bar. In this example the pressure further increases to ca. 230 bar from point 9 to 14 by reduced screw volume followed by slightly reducing the pressure to ca. 220 bar from point 14 to 19 as shown in the pressure diagram.

After passing the pressure increasing extrusion zone 6, the fluid mixture is pushed forward into the orientation die 7 configured to orientate the long fibers by means of spiders, after which the oriented mixture is pushed in a plug flow manner into a heated shaping die 8, which is configured to shape said fluid mixture into a desired profile shape and under a pressure of ca. 220 bar shown in the pressure diagram at point 18 to 19.

After passing heated shaping die 8 the shaped liquid profile is passed to a cooling die 9 downstream of said heated shaping die. This cooling die 9 is configured to cool the outer skin of the product to obtain a product with a solidified outer skin. This product skin gives some rigidity to the profile when it exits the cooling die at a pressure of 220 bar.

After the product exits the cooling die 9 it enters a product condensing die 10 configured to condense and support the product at a pressure of 220 bar on entry, reducing to 50 bar on exit of the product as shown between points 19 to 20 in the pressure diagram and in which a compressive backward force of ca. 50 bar is exercised by means of compression control unit 12, as shown in the pressure diagram at points 20 to 22. After passing the compression control unit 12 the pressure becomes zero between points 22 and 23. The compression control unit is configured as a caterpillar unit, wherein caterpillars on opposite sides of the product exert a counter force in upstream direction to as to provide counter pressure on the product exiting the cooling die to obtain the pressure of at least 200 bar, preferably between 220 - 230 bar, in the pressure increasing extrusion zone 6.

The backward pushing compressive force realizing the quick increasing high pressure in zone 6 of the extruder and increasing as shown in the pressure diagram between points 7 to 9 and slightly increasing further between points 9 to 14 is realised by friction in the condenser die in combination with a pressure or compression control unit 12 which is configured to apply a back pushing force to the shaped and cooled product 11 back in the direction of the extruder and in the condenser unit (see the arrows). This unit is placed around the exiting profile and configured to clamp around the exiting product while exercising a back pushing force.

The Roman numbers I-VII in Fig.1 represent the approximate locations in the apparatus of Fig.1 where the above defined respective process steps I-VII take place.

The apparatus of Fig.1 further comprises a density control system 13 in communication (arrow 17) with a pressure sensor inside the orientation die 7, the compression control unit (arrow 16) and in communication (arrow 14) with the electromotor 1. This enables speed and pressure constancy in the proposed extrusion system. For instance, if the compound pressure drops, the system 13 will give command to the extruder to increase the output of product and during start-up of the process, the system may command the compression control unit, to increase pulling or haul of speed. Similarly, the density control system 13 may be in communication with the pressure increasing extrusion zone 6 (arrow 15) and compression control unit 12 (arrow 16) in order to check, control and adjust process parameters in a pre-programmed automatic manner.

**Example 2 - benefits of a composite product according to the invention.**

The benefits found for the composite product according to the invention as obtained with the apparatus of example 1 are confirmed with tests that were performed with the following wood fiber plastic composition:
Spruce fibers: 73% by mass (at least 60% based on total weight of fibers of large fibers of a length in the particle principle direction of about 2 - 6 mm), polypropylene-based polymer: 27% by mass.

The measured density was 1220 kg/m$^3$

This material is compared with wood fiber composite material that was made with prior art technology which measured densities that range between 1100 and 1150 kg/m$^3$, also with 73% spruce by mass and 27% polypropylene-based polymer by mass.

The material according to the invention is referred to as High Density Wood Fiber Composite (HDWFC). The prior art material is referred to as Wood Fiber Composite WFC.

The following results were obtained.

1. Outside durability and natural UV resistance

A durability class 1 for soil contact (according to EN 305-1) was measured for HDWFC. For the WFC durability classes for soil contact have been determined that range between 2 and 3, according to EN 305-1.

2. Higher strength, stiffness and product stability

A bending strength (MOR) of 75 MPa and bending stiffness (MOE) of 7500 MPa have been measured for HDWFC. For the WFC has been reported values: MOR = 32 MPa, MOE = 3849 MPa.

3. Improved fire resistance

A fire rating class C according to EN 13501 has been reported with HDWFC. For WFC a fire rating class D has been reported according to EN 13501.

4. Lower creep deformation. From creep tests in a dead-weight 3-point bending configuration it is found that the development of creep deformation for HDWFC is at a three times slower pace than for WFC under the same conditions of loading and temperature.
5. The moisture uptake after the 5 hours boiling test according to EN 1087-1 was 3 to 5 % for HDWFC. For WFC the moisture uptake with this test ranges between 6% and 8%.

## Example 3 - Density of a composite product as a function of applied pressure

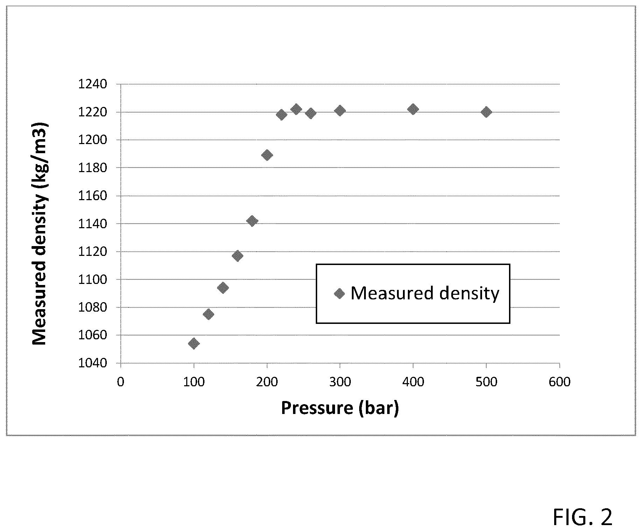

When a composition as shown in example 2 is compressed in a heated press the maximum attainable density or maximum theoretical density can be determined. For this at different pressure levels, the density of the compressed material has been measured. It appears that above a pressure of about 220 bar the density does not increase further (pressures up to 540 bar have been tested). Fig. 2 shows a diagram of composite density in dependency of various pressures applied when compression moulding.

The maximum density that was measured was: $\rho_c$ = 1220 kg/m$^3$.

This is very close (98 %) to the maximum theoretical density of a compound with this composition (1245 kg/m$^3$). This small difference of 2% can have different origins:

- Accuracy of the known densities of the components.
- Effect of neglected components (e.g. wood extractables).
- Accuracy of the percentage of wood fibres in the compound.

Fig. 2 shows that the desired density in kg/m$^3$ of 95% or more of its maximal theoretical density could be obtained when the pressure was increased up to more than 200 bar. Because the density did not increase substantially above 220 bar, it was concluded that an optimal pressure to be reached in step IV) up to step VI) may be set at 220 to 230 bar.

## Example 4 - Scanning Electron Microscopy / Energy Dispersive X-ray (SEM/EDX) analysis.

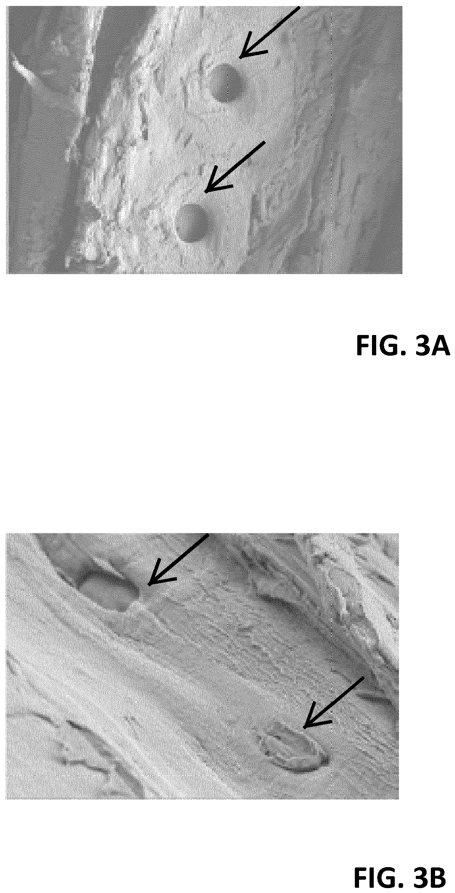

Scanning Electron Microscopy / Energy Dispersive X-ray (SEM/EDX) analysis was carried out on fibers of a prior art product produced at a lower pressure in the production of WFC (Wood Fiber Composite) without the proposed condensing system of the invention (3A) and on a High Density Wood Fiber Composite product (HDWFC) in accordance with the invention as described in Example 2. For this purpose the wood fibres were extracted from extruded WFC and HDWFC produced products and analysed. Fiber samples were secured on an aluminum holder with carbon tape; they were analysed with SEM-EDX. EDX spectra were taken with a take-off angle of app. 39.5° and a maximum accelerating voltage of 2.40 keV; SEM/EDX measurements were performed on a Zeiss 1550 FEGSEM coupled with a Noran Vantage 5000 series EDX system. Prior to SEM-EDX experiments the sample was cut in half to analyse the sample more accurately, since the geometry was unfavourable for the experiments. The wood fibers in both production methods were well compounded and dispersed in the polypropylene and the polypropylene filled the capillaries of the wood fibers differently. This is envisaged in Fig.3, wherein the arrows point at the capillaries. Fig. 3A shows a fiber in a conventional WFC product with open capillaries. Fig.3B shows a fiber in a HDWFC product produced in accordance with the invention. It clearly shows that the capillaries of the fiber shown in Fig.3B are filled with polypropylene.

**Claims**

1. Plastic and wood fiber based composite product, which comprises a plastic in which wood fibers are homogeneously embedded in a mass percentage of 70 - 80 % based on the total weight of plastic and wood fibers, wherein said fibers comprise

   - large fibers with a dominant orientation in a chosen product principal direction and a length in the particle principle direction of about 2 - 6 mm; and
   - small fibers with a random orientation and a length smaller than the length of said large particles;

   wherein the capillaries of said wood fibers are filled with said plastic; **characterized in that** the plastic and wood fiber based composite product has a moisture uptake after a 5 hours boiling test according to EN 1087-1 of 5% or less; and wherein the plastic and wood fiber based composite product has a density in kg/m$^3$ of 95% or more of its maximal theoretical density, wherein the maximal theoretical density of said wood fiber composite product is the density that said wood fiber composite product would have if it would have the same composition without voids, and wherein the maximal theoretical density of the plastic and wood fiber based composite is as calculated in accordance with the following formula:

$$\rho_c \ = \ v_f \ \rho_f \ + \ v_m \ \rho_m \qquad\qquad (\text{Formula 4}),$$

   wherein $\rho_c$ is the maximal theoretical density in kg/m$^3$

   $v_f$ is the fibre volume fraction in %
   $\rho_f$ is the fibre density in kg/m$^3$
   $v_m$ is the plastic volume fraction in %
   $\rho_m$ is the plastic density in kg/m$^3$;

   wherein the maximal theoretical density is based on the plastic and wood fiber components and excludes other components.

2. Plastic and wood fiber based composite product according to claim 1, wherein said plastic is a thermoplastic polymer, preferably a bio based thermoplastic polymer, preferably wherein the plastic contains at least one polyolefin, such as homo or co-polymers of polypropylene, polyethylene, polyvinylchloride, polystyrene, or a combination thereof.

3. Plastic and wood fiber based composite product according to claim 1 or 2, wherein said small fibers have a length in the particle principle direction of at least 0,5 mm.

4. Plastic and wood fiber based composite product according to any of the previous claims, which has a density in kg/m$^3$ of 96 % or more of its maximum theoretical density, preferably 97 % or more such as 98 % or more.

5. Plastic and wood fiber based composite product according to any of the previous claims, wherein the wood fibers embedded in the plastic are void free as determined by Scanning Electron Microscopy and/or Energy Dispersive X-Ray (SEM/EDX) analysis.

6. Plastic and wood fiber based composite product according to any of the previous claims, wherein said wood fibers are embedded in said plastic in an abutted fashion at least along the dominant orientation.

7. Plastic and wood fiber based composite product according to any of the claims 2 to 6, wherein said plastic is polypropylene and the density of said composite product is between 1200 and 1220 kg/m$^3$; or wherein said plastic is polyvinylchloride and the density of said composite product is between 1400 and 1420 kg/m$^3$.

8. Plastic and wood fiber based composite product according to any of the previous claims, which contains reinforcement elements, preferably reinforcement elements of metal, natural or synthetic material.

9. Plastic and wood fiber based composite product according to any of the previous claims, which is a construction element selected from an I-profile, H-profile or another profile comprising a body and legs or arms that are protruding therefrom or a construction element having the shape of a hollow or tubular profile.

10. Method for manufacturing a plastic and wood fiber based composite product according to any of the previous claims by means of an extrusion process **characterized by** pushing the material to be extruded forward through an extruder, comprising

I) feeding an agglomerate of said plastic and said wood fibers into the extruder;

II) heating said agglomerate above the melting temperature of the plastic to plasticize the agglomerate to obtain a fluid material;

III) degassing the fluid material such to make capillary action possible so that fluid plastic material fills the capillaries of the wood fibers;

IV) while increasing pressure to at least 200 bar, mixing and dispersing the molten plastic around the wood fibers;

V) orienting wood fibers to obtain a fluid mixture having orientated fibers, wherein said large fibers have a dominant orientation in a chosen product principal direction and said small fibers have a random orientation;

VI) shaping said fluid mixture having orientated fibers, followed by cooling to obtain a product with a solidified outer skin, wherein cooling takes place in a cooling die; **characterized in that**

VII) after the product exits the cooling die it enters a product condensing die, configured to condense and support the product and in which a backward compressive force is exercised on the product exiting the cooling die to obtain the pressure of at least 200 bar in step IV).

11. Method according to claim 10, wherein in step IV) the pressure is increased to a pressure of 220 -230 bar.

12. Method according to claim 10 or 11, which further comprises a step of preparing an agglomerate of said plastic and said wood fibers prior to step I).

13. Apparatus for manufacturing a plastic and wood fiber based composite product according to any of the claims 1 to 9, which apparatus comprises an extruder and dies, and which has the following configuration:

a heating and plasticizing zone (2) configured to heat an agglomerate of said plastic and said wood fibers to obtain a fluid material of molten plastic and wood fibers;

means (4) to push the fluid material forward through the extruder;

a degassing zone (5) downstream of said heating and plasticizing zone (2) and configured to degas the fluid material and fill the capillaries of the wood fibers with said molten plastic;

a pressure increasing extrusion zone (6) downstream of said degassing zone (5), and configured to mix and disperse the molten plastic around and into the wood fibers; and to obtain a fluid mixture of plastic and wood fibers at a pressure of at least 200 bar;

an orientation zone comprising an orientation die (7) which is configured to orientate the long fibers in the mixture by means of spiders and to create a plug flow of the mixture,

a heated shaping die (8) downstream of the orientation zone, and configured to shape said fluid mixture having orientated fibers and maintaining the plug flow,

a cooling die (9) downstream of said heated shaping die (8) and configured to cool the outer skin of said fluid mixture having orientated fibers in a plug flow manner, to obtain a semi solidified product having a solidified outer skin; **characterized by**

a condensing die (10) downstream of the cooling die (9) and configured to support the semi solidified product when a backwards pushing compressive force is exerted on the semi solidified product;

a compression control unit (12) downstream of the condensing die (10) and configured to exert a backwards pushing compressive force on the semi solidified product so as to create an upstream increase of mixture pressure.

14. Apparatus according to claim 13, comprising a density control system (13) connected with a pressure sensor inside the orientation zone and with a means (1) for driving the extruder.

15. Plastic and wood fiber based composite product according to any of the claims 1-9 which is obtainable by the method according to any of the claims 10-12.

**Patentansprüche**

1. Verbundprodukt auf der Basis von Kunststoff und Holzfasern, das einen Kunststoff umfasst, in den Holzfasern mit einem Massenanteil von 70 bis 80% bezogen auf das Gesamtgewicht von Kunststoff und Holzfasern homogen eingebettet sind, wobei die Fasern umfassen:

- große Fasern mit einer vorherrschenden Ausrichtung in einer gewählten Produkthauptrichtung und einer Länge in der Partikelhauptrichtung von rund 2 bis 6 mm; und
- kleine Fasern mit einer zufälligen Ausrichtung und einer Länge, die geringer ist als die Länge der großen Partikel;

wobei die Kapillaren der Holzfasern mit dem Kunststoff gefüllt sind; **dadurch gekennzeichnet, dass** das Verbundprodukt auf der Basis von Kunststoff und Holzfasern nach einer Kochprüfung gemäß EN 1087-1 von 5 Stunden Dauer eine Feuchtigkeitsaufnahme von 5% oder weniger aufweist; und wobei das Verbundprodukt auf der Basis von Kunststoff und Holzfasern eine Dichte in kg/m$^3$ von 95% oder mehr seiner maximalen theoretischen Dichte aufweist, wobei die maximale theoretische Dichte des Holzfaserverbundprodukts die Dichte ist, die das Holzfaserverbundprodukt hätte, wenn es die gleiche Zusammensetzung ohne Hohlräume hätte, und wobei die maximale theoretische Dichte des Verbundwerkstoffs auf der Basis von Kunststoff und Holzfasern nach der folgenden Formel berechnet wird:

$$\rho_c = v_f\,\rho_f + v_m\,\rho_m \qquad \text{(Formel 4)},$$

wobei $\rho_c$ die maximale theoretische Dichte in kg/m$^3$ ist,
$v_f$ der Faservolumenanteil in % ist,
$\rho_f$ die Faserdichte in kg/m$^3$ ist,
$v_m$ der Kunststoffvolumenanteil in % ist,
$\rho_m$ die Kunststoffdichte in kg/m$^3$ ist;
wobei die maximale theoretische Dichte auf den Kunststoff- und Holzfaserbestandteilen basiert und andere Bestandteile ausschließt.

2. Verbundprodukt auf der Basis von Kunststoff und Holzfasern nach Anspruch 1, wobei der Kunststoff ein thermoplastisches Polymer, vorzugsweise ein biobasiertes thermoplastisches Polymer, ist, vorzugsweise wobei der Kunststoff mindestens ein Polyolefin, wie etwa Homo- oder Copolymere von Polypropylen, Polyethylen, Polyvinylchlorid, Polystyrol oder eine Kombination davon, enthält.

3. Verbundprodukt auf der Basis von Kunststoff und Holzfasern nach Anspruch 1 oder 2, wobei die kleinen Fasern eine Länge in der Partikelhauptrichtung von mindestens 0,5 mm aufweisen.

4. Verbundprodukt auf der Basis von Kunststoff und Holzfasern nach einem der vorhergehenden Ansprüche, das eine Dichte in kg/m$^3$ von 96% oder mehr seiner maximalen theoretischen Dichte aufweist, vorzugsweise 97% oder mehr wie etwa 98% oder mehr.

5. Verbundprodukt auf der Basis von Kunststoff und Holzfasern nach einem der vorhergehenden Ansprüche, wobei die in den Kunststoff eingebetteten Holzfasern hohlraumfrei sind, wie durch Rasterelektronenmikroskop- und/oder energiedispersive Röntgenanalyse (REM/EDA) bestimmt wird.

6. Verbundprodukt auf der Basis von Kunststoff und Holzfasern nach einem der vorhergehenden Ansprüche, wobei die Holzfasern zumindest entlang der vorherrschenden Ausrichtung auf Stoß in den Kunststoff eingebettet sind.

7. Verbundprodukt auf der Basis von Kunststoff und Holzfasern nach einem der Ansprüche 2 bis 6, wobei der Kunststoff Polypropylen ist und die Dichte des Verbundprodukts zwischen 1200 und 1220 kg/m$^3$ beträgt; oder wobei der Kunststoff Polyvinylchlorid ist und die Dichte des Verbundprodukts zwischen 1400 und 1420 kg/m$^3$ beträgt.

8. Verbundprodukt auf der Basis von Kunststoff und Holzfasern nach einem der vorhergehenden Ansprüche, das Verstärkungselemente enthält, vorzugsweise Verstärkungselemente aus Metall, natürlichen oder synthetischen Stoffen.

9. Verbundprodukt auf der Basis von Kunststoff und Holzfasern nach einem der vorhergehenden Ansprüche, bei dem es sich um ein Konstruktionselement, das aus einem I-Profil, einem H-Profil oder einem anderen Profil ausgewählt ist, das einen Körper und Schenkel oder Arme umfasst, die davon abstehen, oder um ein Konstruktionselement mit der Form eines Hohl- oder Rohrprofils handelt.

10. Verfahren zur Herstellung eines Verbundprodukts auf der Basis von Kunststoff und Holzfasern nach einem der vorhergehenden Ansprüche mittels eines Extrusionsverfahrens, das durch das Pressen des zu extrudierenden Materials vorwärts durch einen Extruder gekennzeichnet ist, umfassend

I) Einspeisen eines Agglomerats aus dem Kunststoff und den Holzfasern in den Extruder;
II) Erhitzen des Agglomerats über die Schmelztemperatur des Kunststoffs, um das Agglomerat zu plastifizieren und so ein flüssiges Material zu erhalten;
III) Entgasen des flüssigen Materials, um eine Kapillarwirkung zu ermöglichen, sodass flüssiges Kunststoffmaterial die Kapillaren der Holzfasern füllt;
IV) während des Erhöhens des Drucks auf mindestens 200 bar Mischen und Verteilen des geschmolzenen Kunststoffs um die Holzfasern;
V) Ausrichten von Holzfasern, um ein flüssiges Gemisch mit ausgerichteten Fasern zu erhalten, wobei die großen Fasern eine vorherrschende Ausrichtung in einer gewählten Produkthauptrichtung aufweisen und die kleinen Fasern eine zufällige Ausrichtung aufweisen;
VI) Formen des flüssigen Gemischs mit ausgerichteten Fasern, gefolgt von Abkühlen, um ein Produkt mit einer verfestigten Außenhaut zu erhalten, wobei das Abkühlen in einer Kühlmatrize erfolgt; **dadurch gekennzeichnet, dass**
VII) das Produkt, nachdem es aus der Kühlmatrize ausgetreten ist, in eine Produktverdichtungsmatrize eintritt, die dazu eingerichtet ist, das Produkt zu verdichten und zu stützen, und in der eine rückwärts gerichtete Presskraft auf das aus der Kühlmatrize austretende Produkt ausgeübt wird, um den Druck von mindestens 200 bar im Schritt IV) zu erhalten.

11. Verfahren nach Anspruch 10, wobei der Druck in Schritt IV) auf einen Druck von 220 bis 230 bar erhöht wird.

12. Verfahren nach Anspruch 10 oder 11, das ferner einen Schritt des Herstellens eines Agglomerats aus dem Kunststoff und den Holzfasern vor Schritt I) umfasst.

13. Vorrichtung zum Herstellen eines Verbundprodukts auf der Basis von Kunststoff und Holzfasern nach einem der Ansprüche 1 bis 9, wobei die Vorrichtung einen Extruder und Matrizen umfasst und die folgende Konfiguration aufweist:

eine Heiz- und Plastifizierungszone (2), die zum Erhitzen eines Agglomerats aus dem Kunststoff und den Holzfasern eingerichtet ist, um ein flüssiges Material aus geschmolzenem Kunststoff und Holzfasern zu erhalten;
Mittel (4) zum Pressen des flüssigen Materials vorwärts durch den Extruder;
eine Entgasungszone (5), die der Heiz- und Plastifizierungszone (2) nachgeschaltet und dazu eingerichtet ist, das flüssige Material zu entgasen und die Kapillaren der Holzfasern mit dem geschmolzenen Kunststoff zu füllen;
eine Druckerhöhungsextrusionszone (6), die der Entgasungszone (5) nachgeschaltet und dazu eingerichtet ist, den geschmolzenen Kunststoff zu mischen und um und in die Holzfasern zu verteilen; und ein flüssiges Gemisch aus Kunststoff und Holzfasern mit einem Druck von mindestens 200 bar zu erhalten;
eine Ausrichtzone, die eine Ausrichtmatrize (7) umfasst, die dazu eingerichtet ist, die langen Fasern in dem Gemisch mithilfe von Spinnen auszurichten und eine Pfropfenströmung des Gemischs zu erzeugen,
eine beheizte Formmatrize (8), die der Ausrichtzone nachgeschaltet und dazu eingerichtet ist, das flüssige Gemisch zu formen, das ausgerichtete Fasern aufweist und die Pfropfenströmung aufrechterhält,
eine Kühlmatrize (9), die der beheizten Formmatrize (8) nachgeschaltet und dazu eingerichtet ist, die Außenhaut des flüssigen Gemischs mit ausgerichteten Fasern in einer Pfropfenströmungsweise abzukühlen, um ein halbverfestigtes Produkt mit einer verfestigten Außenhaut zu erhalten; **gekennzeichnet durch**
eine Verdichtungsmatrize (10), die der Kühlmatrize (9) nachgeschaltet und dazu eingerichtet ist, das halbverfestigte Produkt abzustützen, wenn eine rückwärts gerichtete Presskraft auf das halbverfestigte Produkt ausgeübt wird;
eine Drucksteuereinheit (12), die der Verdichtungsmatrize (10) nachgeschaltet und dazu eingerichtet ist, eine rückwärts gerichtete Presskraft auf das halbverfestigte Produkt auszuüben, um eine stromaufwärts gerichtete Erhöhung des Gemischdrucks zu bewirken.

14. Vorrichtung nach Anspruch 13, umfassend eine Dichtesteuersystem (13), das mit einem Drucksensor innerhalb der Ausrichtzone und mit Mitteln (1) zum Antreiben des Extruders verbunden ist.

15. Verbundprodukt auf der Basis von Kunststoff und Holzfasern nach einem der Ansprüche 1 bis 9, das mit dem Verfahren nach einem der Ansprüche 10 bis 12 erhalten werden kann.

**Revendications**

1. Produit composite à base de plastique et de fibres de bois, qui comprend un plastique dans lequel des fibres de bois sont incorporées de manière homogène dans un pourcentage en masse de 70 à 80 % sur la base du poids total de plastique et de fibres de bois, dans lequel lesdites fibres comprennent

   - de grandes fibres avec une orientation dominante dans une direction principale de produit choisie et une longueur dans la direction majeure de particules d'environ 2 à 6 mm ; et
   - de petites fibres avec une orientation aléatoire et une longueur plus petite que la longueur desdites grandes particules ;

   dans lequel les capillaires desdites fibres de bois sont remplis dudit plastique ; **caractérisé en ce que** le produit composite à base de plastique et de fibres de bois a une absorption d'humidité après un essai de résistance à l'eau bouillante de 5 heures selon EN 1087-1 de 5 % ou moins ; et dans lequel le produit composite à base de plastique et de fibres de bois a une densité en kg/m³ de 95 % ou plus de sa densité théorique maximale, dans lequel la densité théorique maximale dudit produit composite en fibres de bois est la densité que ledit produit composite en fibres de bois aurait s'il avait la même composition sans interstices, et dans lequel la densité théorique maximale du composite à base de plastique et de fibres de bois est telle que calculée conformément à la formule suivante :

   $$\rho_c = v_f \, \rho_f + v_m \, \rho_m \qquad \text{(Formule 4)},$$

   dans laquelle $\rho_c$ est la densité théorique maximale en kg/m³
   $v_f$ est la fraction volumique de fibres en %
   $\rho_f$ est la densité de fibres en kg/m³
   $v_m$ est la fraction volumique de plastique en %
   $\rho_m$ est la densité de plastique en kg/m³ ;
   dans lequel la densité théorique maximale est basée sur les constituants de plastique et de fibres de bois et exclut d'autres constituants.

2. Produit composite à base de plastique et de fibres de bois selon la revendication 1, dans lequel ledit plastique est un polymère thermoplastique, de préférence un polymère thermoplastique biosourcé, de préférence dans lequel le plastique contient au moins une polyoléfine, par exemple des homopolymères ou des copolymères de polypropylène, polyéthylène, polychlorure de vinyle, polystyrène, ou une combinaison de ceux-ci.

3. Produit composite à base de plastique et de fibres de bois selon la revendication 1 ou 2, dans lequel lesdites petites fibres ont une longueur dans la direction majeure de particules d'au moins 0,5 mm.

4. Produit composite à base de plastique et de fibres de bois selon l'une quelconque des revendications précédentes, qui a une densité en kg/m³ de 96 % ou plus de sa densité théorique maximale, de préférence 97 % ou plus, par exemple 98 % ou plus.

5. Produit composite à base de plastique et de fibres de bois selon l'une quelconque des revendications précédentes, dans lequel les fibres de bois incorporées dans le plastique sont dépourvues d'interstices telles que déterminées par une microscopie électronique à balayage et/ou une analyse aux rayons X à dispersion d'énergie (SEM/EDX).

6. Produit composite à base de plastique et de fibres de bois selon l'une quelconque des revendications précédentes, dans lequel lesdites fibres de bois sont incorporées dans ledit plastique en butée au moins le long de l'orientation dominante.

7. Produit composite à base de plastique et de fibres de bois selon l'une quelconque des revendications 2 à 6, dans lequel ledit plastique est du polypropylène et la densité dudit produit composite est entre 1 200 et 1 220 kg/m³ ; ou dans lequel ledit plastique est du polychlorure de vinyle et la densité dudit produit composite est entre 1 400 et 1 420 kg/m³.

8. Produit composite à base de plastique et de fibres de bois selon l'une quelconque des revendications précédentes, qui contient des éléments de renfort, de préférence des éléments de renfort en matériau métallique, naturel ou synthétique.

9. Produit composite à base de plastique et de fibres de bois selon l'une quelconque des revendications précédentes, qui est un élément de construction sélectionné parmi un profil en I, un profil en H ou un autre profil comprenant un corps et des jambes ou des bras qui font saillie à partir de celui-ci ou un élément de construction ayant la forme d'un profil creux ou tubulaire.

10. Méthode pour fabriquer un produit composite à base de plastique et de fibres de bois selon l'une quelconque des revendications précédentes au moyen d'un procédé d'extrusion **caractérisé par** le fait de pousser le matériau devant être extrudé en avant à travers une extrudeuse, comprenant

I) l'introduction d'un agglomérat dudit plastique et desdites fibres de bois dans l'extrudeuse ;
II) le chauffage dudit agglomérat au-dessus de la température de fusion du plastique pour plastifier l'agglomérat pour obtenir un matériau fluide ;
III) le dégazage du matériau fluide de sorte à rendre une action capillaire possible de façon à ce qu'un matériau plastique fluide remplisse les capillaires des fibres de bois ;
IV) tout en augmentant la pression jusqu'à au moins 200 bars, le mélange et la dispersion du plastique fondu autour des fibres de bois ;
V) l'orientation de fibres de bois pour obtenir un mélange fluide ayant des fibres orientées, dans laquelle lesdites grandes fibres ont une orientation dominante dans une direction principale de produit choisie et lesdites petites fibres ont une orientation aléatoire ;
VI) le façonnage dudit mélange fluide ayant des fibres orientées, suivi du refroidissement pour obtenir un produit avec une enveloppe extérieure solidifiée, dans laquelle le refroidissement a lieu dans une filière de refroidissement ; **caractérisée en ce que**
VII) après que le produit est sorti de la filière de refroidissement il entre dans une filière de condensation de produit, configurée pour condenser et supporter le produit et dans laquelle une force de compression en arrière est exercée sur le produit sortant de la filière de refroidissement pour obtenir la pression d'au moins 200 bars à l'étape IV).

11. Méthode selon la revendication 10, dans laquelle à l'étape IV) la pression augmente jusqu'à une pression de 220 à 230 bars.

12. Méthode selon la revendication 10 ou 11, qui comprend en outre une étape consistant à préparer un agglomérat dudit plastique et desdites fibres de bois avant l'étape I).

13. Appareil pour fabriquer un produit composite à base de plastique et de fibres de bois selon l'une quelconque des revendications 1 à 9, lequel appareil comprend une extrudeuse et des filières, et qui a la configuration suivante :

une zone de chauffage et de plastification (2) configurée pour chauffer un agglomérat dudit plastique et desdites fibres de bois pour obtenir un matériau fluide de plastique fondu et de fibres de bois ;
des moyens (4) pour pousser le matériau fluide en avant à travers l'extrudeuse ;
une zone de dégazage (5) en aval de ladite zone de chauffage et de plastification (2) et configurée pour dégazer le matériau fluide et remplir les capillaires des fibres de bois avec ledit plastique fondu ;
une zone d'extrusion à augmentation de pression (6) en aval de ladite zone de dégazage (5), et configurée pour mélanger et disperser le plastique fondu autour des et dans les fibres de bois ; et pour obtenir un mélange fluide de plastique et de fibres de bois à une pression d'au moins 200 bars ;
une zone d'orientation comprenant une filière d'orientation (7) qui est configurée pour orienter les longues fibres dans le mélange au moyen de ponts et pour créer un écoulement en piston du mélange,
une filière de façonnage chauffée (8) en aval de la zone d'orientation, et configurée pour façonner ledit mélange fluide ayant des fibres orientées et maintenant l'écoulement en piston,
une filière de refroidissement (9) en aval de ladite filière de façonnage chauffée (8) et configurée pour refroidir l'enveloppe extérieure dudit mélange fluide ayant des fibres orientées avec un écoulement en piston, pour obtenir un produit semi-solidifié ayant une enveloppe extérieure solidifiée ; **caractérisé par**
une filière de condensation (10) en aval de la filière de refroidissement (9) et configurée pour supporter le produit semi-solidifié lorsqu'une force de compression à poussée en arrière est exercée sur le produit semi-solidifié ;
une unité de commande de compression (12) en aval de la filière de condensation (10) et configurée pour exercer une force de compression à poussée en arrière sur le produit semi-solidifié de façon à créer une augmentation en amont de pression de mélange.

14. Appareil selon la revendication 13, comprenant un système de commande de densité (13) relié à un capteur de pression à l'intérieur de la zone d'orientation et à un moyen (1) pour entraîner l'extrudeuse.

**15.** Produit composite à base de plastique et de fibres de bois selon l'une quelconque des revendications 1 à 9 qui peut être obtenu par la méthode selon l'une quelconque des revendications 10 à 12.

FIG. 1

FIG. 2

**FIG. 3A**

**FIG. 3B**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1172404 A1
- US 2007063373 A1
- EP 1610938 B1
- WO 2012072275 A1